Europäisches Patentamt

European Patent Office

Office européen des brevets

(19)

(11) Veröffentlichungsnummer : **0 065 248**
**B1**

(12) **EUROPÄISCHE PATENTSCHRIFT**

(45) Veröffentlichungstag der Patentschrift :
20.02.85

(21) Anmeldenummer : 82104026.8

(22) Anmeldetag : 08.05.82

(51) Int. Cl.⁴ : **H 01 M 10/39, H 01 M 10/50//**
**B60L11/18**

(54) **Hochtemperaturbatterie.**

(30) Priorität : 15.05.81 DE 3119409

(43) Veröffentlichungstag der Anmeldung :
24.11.82 Patentblatt 82/47

(45) Bekanntmachung des Hinweises auf die Patenterteilung : 20.02.85 Patentblatt 85/08

(84) Benannte Vertragsstaaten :
BE FR GB IT NL

(56) Entgegenhaltungen :
DE-A- 2 610 222
DE-A- 2 835 501

(73) Patentinhaber : BROWN, BOVERI & CIE Aktiengesellschaft
Kallstadter Strasse 1
D-6800 Mannheim 31 (DE)

(72) Erfinder : Meinhold, Henner, Dr. Dipl.-Phys.
Zwischen den Bächen 14a
D-6902 Sandhausen (DE)
Erfinder : Hasenauer, Dieter, Ing.grad.
Freudenbergstrasse 13
D-6940 Weinheim (DE)

(74) Vertreter : Kempe, Wolfgang, Dr. et al
c/o Brown, Boveri & Cie AG Postfach 351
D-6800 Mannheim 1 (DE)

## Beschreibung

Die Erfindung bezieht sich auf eine Hochtemperaturbatterie mit mindestens einer elektrochemischen Speicherzelle die von einer thermischen Isolierung sowie den Zu- und Ableitungen für die Kühlluft umgeben ist.

Solche Hochtemperaturbatterien, die mit elektrochemischen Speicherzellen aufgebaut sind, werden in Zukunft in vermehrtem Maße für den Elektroantrieb von Fahrzeugen eingesetzt.

Die bis jetzt bekannt gewordenen Hochtemperaturbatterien sind aus einer Vielzahl von elektrochemischen Speicherzellen aufgebaut. Die Batterie arbeitet bei einer Temperatur von etwa 350 Grad Celsius. Um Wärmeverluste zu vermeiden, sind die Speicherzellen der Hochtemperaturbatterie von einer thermischen Isolierung umgeben. Andererseits muß jedoch auch für eine ausreichende Kühlung innerhalb dieser Batterie gesorgt werden, damit die Betriebstemperatur der Batterie nicht überschritten wird, und es zu keiner Beschädigung der Speicherzellen kommen kann.

Aus der DE-OS 26 45 261 ist ein wiederaufladbarer Hochtemperaturakkumulator bekannt. Dieser Akkumulator ist von einem Gehäuse umgeben, an den sich unter Freilassung eines Zwischenraumes eine isolierende Ummantelung anschließt, die den gesamten Akkumulator umgibt. In den Zwischenraum kann von außen Luft zum Wärmen oder Kühlen eingeleitet werden. Die Luft kann an einem gegenüberliegenden Auslaß den Zwischenraum wieder verlassen. Von Nachteil ist bei dieser Einrichtung, daß die Zellen des Akkumulators nicht einzeln gekühlt beziehungsweise gewärmt werden können.

Der Erfindung liegt deshalb die Aufgabe zugrunde, mit einem Minimum an baulichem Aufwand eine Hochtemperaturbatterie zu schaffen, die eine optimale Kühlung aller Speicherzellen gewährleistet und ein Maximum an Sicherheit bietet.

Gelöst wird die Aufgabe bei einer Hochtemperaturbatterie der eingangs genannten Art dadurch, daß mindestens ein in die Hochtemperaturbatterie einschiebbarer Modul für die Aufnahme der Speicherzellen vorgesehen ist, in welchem eine Zuleitung für die Kühlluft und eine Ableitung für die Kühlluft so angeordnet sind, daß die Kühlluft gegen die Schwerkraft in den Modul ein- und mit der Schwerkraft aus dem Modul ableitbar ist.

Die Hochtemperaturbatterie ist so ausgebildet, daß sie für jeden Modul wenigstens einen Anschluß für die Kühlluftzufuhr und einen Anschluß für die Kühlluftabfuhr aufweist. Jeder hier verwendete Modul kann sechzehn Speicherzellen aufnehmen. Jeder Modul kann für sich in die hochtemperaturbatterie eingeschoben und aus ihr wieder entnommen werden. Bei einer Ausführungsform ist der Modul von einer Sicherheitsumhüllung umgeben. Bei einer anderen Ausführungsform ist auf diese Sicherheitsumhüllung verzichtet. Bei Verwendung dieser Module ist der die Module aufnehmende Raum der Hochtemperaturbatterie in mehrere Kammern aufgeteilt. In jede Kammer wird ein offener Modul eingeschoben. Jede Kammer weist nur eine Öffnung für das Einschieben eines Moduls auf. Die Begrenzungswände der Kammer bilden hierbei die Sicherheitsumhüllung des Moduls. Durch eine Frontplatte, die jeder Modul aufweist wird die Kammer nach außen hin vollständig verschlossen. In jedem Modul verläuft die Zuleitung und die Ableitung für die Kühlluft parallel zu den Speicherzellen. Die Zuleitung ist vorzugsweise am ersten und die Ableitung der Kühlluft am zweiten Ende des Moduls angeordnet. Die Einlaßöffnung der Zuleitung sowie die Auslaßöffnung der Ableitung sind jeweils an der Unterseite des Moduls angeordnet. Es besteht jedoch auch die Möglichkeit diese Ein- und Auslaßöffnungen am ersten bzw. am zweiten seitlichen, unteren Ende des Moduls anzuordnen. Die Zuleitung für die Kühlluft steht nur über eine Verbindungsöffnung mit dem Innenraum des Moduls in Verbindung, in dem die Speicherzellen angeordnet sind. Diese Verbindungsöffnung ist im oberen Bereich des Moduls angeordnet. Die Ableitung der Kühlluft steht ebenfalls nur über eine Verbindungsöffnung mit dem Innenraum des Moduls in Verbindung. Diese Verbindungsöffnung ist ebenfalls im oberen Bereich des Moduls angeordnet. Die in den Innenraum des Moduls geleitete Kühlluft wird an den Speicherzellen nach unten umgelenkt. Bei Bedarf kann die Kühlluft jedoch auch von unten nach oben geführt werden. Die Funktionen der Zuleitung und der Ableitung sind bei den hier beschriebenen Ausführungsbeispielen vertauschbar. Durch die oben beschriebenen Maßnahmen wird bei der Hochtemperaturbatterie sichergestellt, daß die Kühlluft gegen die Schwerkraft in den Modul eingeleitet und mit der Schwerkraft aus dem Modul abgeleitet wird. Dies ist insbesondere dann von Vorteil, wenn es zu einer Zerstörung der Speicherzellen innerhalb des Moduls kommt. In einem solchen Störfall wird Schwefeldioxyd gebildet. Dieses weist ein höheres spezifisches Gewicht als Luft auf. Aufgrund der oben beschriebenen Maßnahmen wird durch das Schwefeldioxyd das weitere Eindringen von Luftsauerstoff in die Hochtemperaturbatterie insbesondere in den Modul verhindert. Damit wird ein weiteres Abbrennen der Speicherzellen bzw. das Auftreten von Schwefel vermieden.

Nachfolgend wird die Erfindung anhand von Zeichnungen erläutert.

Es zeigen:

Figur 1 eine Hochtemperaturbatterie mit geschlossenen Modulen,

Figur 2 eine Hochtemperaturbatterie mit Sicherheitskammern für den Einsatz von offenen Modulen,

Figur 3 einen Vertikalschnitt durch einen geschlossenen Modul.

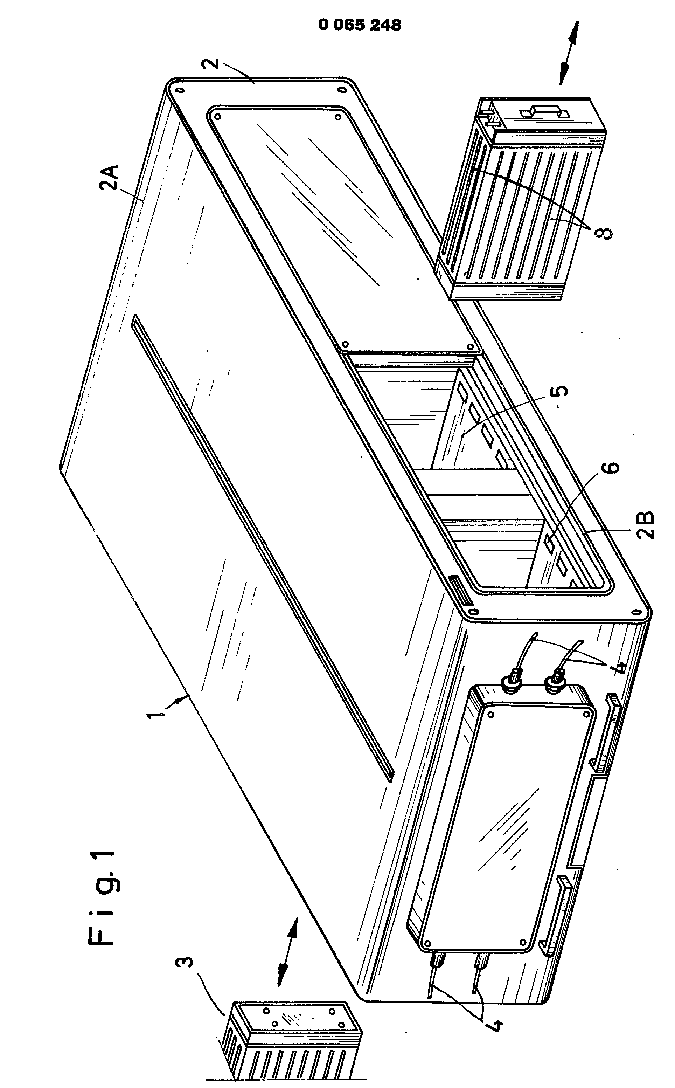

Die in Fig. 1 gezeigte Hochtemperaturbatterie 1 besteht im wesentlichen aus einer thermischen Isolierung 2, 36 Modulen 3, sowie elektrischen Anschlüssen 4.

Die Hochtemperaturbatterie wird durch die thermische Isolierung 2 begrenzt. Diese besteht aus einem doppelwandigen Gehäuse, dessen Wände aus Stahlblech gefertigt sind. Der Raum zwischen den inneren und äußeren Wänden ist evakuiert und mit einem Isoliermaterial ausgefüllt.

Im Inneren der thermischen Isolierung 2 sind beidseitig des Symmetrieachse der Hochtemperaturbatterie 1 zwei Hohlräume 5 vorgesehen, die zur Aufnahme der Module 3 dienen. Durch Entfernen der seitlichen Begrenzungsflächen der thermischen Isolierung 2 können diese Hohlräume 5 zugänglich gemacht werden. Jeder der beiden Hohlräume 5 kann bei dem hier gezeigten Ausführungsbeispiel neun Module 3 aufnehmen. Für jeden Modul ist ein Anschluß 6 bzw. 7 für die Kühlluftzufuhr bzw. Kühlluftabfuhr vorgesehen. Der erste Anschluß 6 befindet sich am ersten Ende eines jeden Moduls 3 während der zweite Anschluß 7 (hier nicht dargestellt) im Bereich des zweiten Modulendes angeordnet ist. Jeder der hier gezeigten Module 3 enthält sechzehn elektrochemische Speicherzellen (hier nicht dargestellt). Jeder Modul 3 kann unabhängig von den übrigen Modulen 3 in die Batterie eingeschoben bzw. der Batterie entnommen werden. Bei der in Fig. 1 gezeigten Hochtemperaturbatterie 1 ist jeder Modul 3 von einer Sicherheitsumhüllung 8 umgeben, die ihn vollständig nach außen hin und gegen seine beiden Nachbarmodule 3 abschirmt.

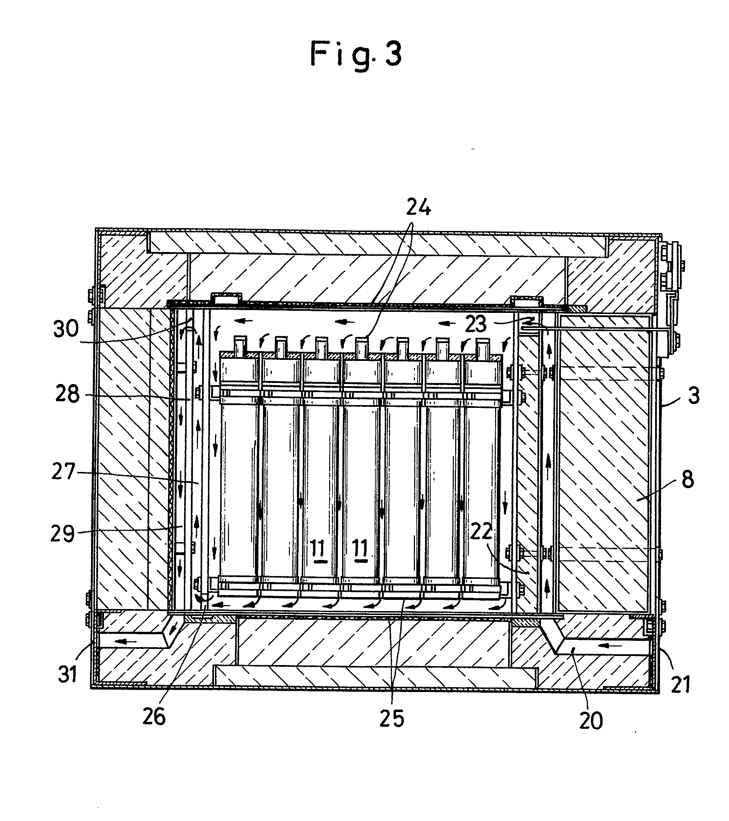

In Fig. 3 ist der Aufbau eines Modul 3 dargestellt, und in der dazugehörigen Beschreibung ausführlich erläutert.

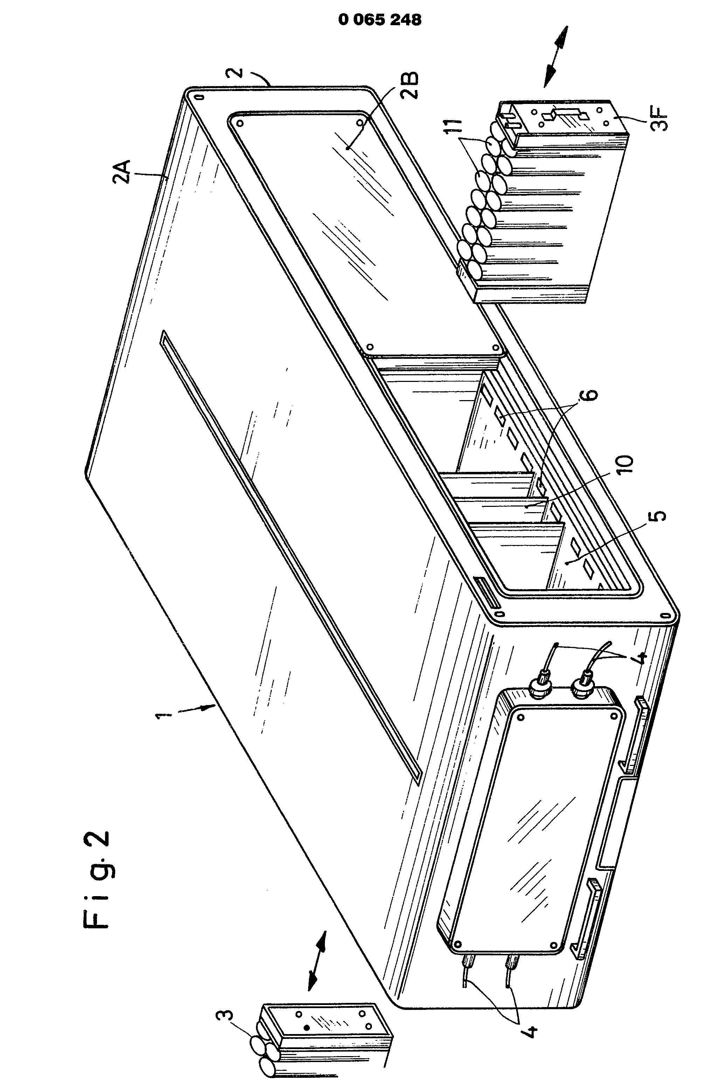

Fig. 2 zeigt eine Variante der in Fig. 1 gezeigten Hochtemperaturbatterie 1. Sie ist im wesentlichen so aufgebaut, wie die in Fig. 1 gezeigte und in der dazugehörigen Beschreibung erläuterte Batterie. Der wesentliche Unterschied zwischen dieser Hochtemperaturbatterie und der bereits beschriebenen besteht darin, daß die hier verwendeten Module 3 keine Sicherheitsumhüllungen 8 besitzen. Zur Abtrennung eines jeden Moduls 3 gegenüber seinen Nachbarmodulen 3 ist innerhalb der Hohlräume 5 für jeden Modul 3 eine Kammer 10 vorgesehen, die nur eine Öffnung für das Einschieben eines jeden Moduls 3 besitzt. Durch die Frontplatte 3F, die jeder Modul 3 besitzt wird die Öffnung in der Kammer 10 vollständig verschlossen. Durch die Begrenzungswände der Kammern 10 erhalten die Speicherzellen 11 eines jeden Moduls 3 ebenso wie bei den in Fig. 1 gezeigten Modulen 3 die erforderliche Sicherheitsumhüllung. Jede Kammer 10 ist zusätzlich mit einem Anschluß 6 und 7 für die Kühlluftzufuhr bzw. -abfuhr versehen. Vorzugsweise ist auch hierbei der erste Anschluß 6 im Bereich des ersten Modulendes und der Anschluß 7 (hier nicht dargestellt) im Bereich des zweiten Modulendes angeordnet.

Fig. 3 zeigt einen Vertikalschnitt durch einen Modul 3. Der Schnitt verläuft parallel zur Längsachse des Moduls 3. Der gesamte Modul 3 ist von einer Sicherheitsumhüllung 8 umgeben. Diese ist aus einem Isoliermaterial gefertigt. Das gleiche gilt für die Wände der Kammern 10. Im Innern des Moduls 3 sind die Speicherzellen 11 angeordnet. Sie sind über ein speziell ausgebildete Halterung so befestigt, daß zwischen der Sicherheitsumhüllung 8 und ihren oberen und unteren Enden ein Freiraum 24, 25 verbleibt. Jeder Modul enthält zwei Reihen von Speicherzellen 11. Die Speicherzellen 11 sind paarweise aneinander gefügt. Sie sind aufrecht in den Modul 3 eingesetzt. Zwischen den einzelnen Speicherzellen 11 verbleiben ebenfalls Freiräume, durch die in ausreichendem Maße Kühlluft strömen kann. Der Modul ist mit einer Zuleitung 20 für die Kühlluft versehen. Die Eintrittsöffnung 21 der Zuleitung 20 ist am seitlichen unteren Ende angeordnet. Vorzugsweise wird die Öffnung 21 bei einem Modul 3, der in die Hochtemperaturbatterie 1 eingeschoben wird, welche in Fig. 1 dargestellt ist, an der Unterseite des Moduls 3 angeordnet. Die Zuleitung 20 ist so installiert, daß sie parallel zu den Speicherzellen 11 verläuft. Die Speicherzellen 11 sind durch eine Trennwand 22 von der Zuleitung 20 abgetrennt. Lediglich im oberen Bereich der Trennwand 22 ist eine Verbindungsöffnung 23 vorgesehen. Durch diese Verbindungsöffnung 23 kann die Kühlluft, welche in die Zuleitung 20 eingeleitet wird, in den Innenbereich des Moduls 3 gelangen, in dem die Speicherzellen 11 angeordnet sind. Die Kühlluft, die durch die Verbindungsöffnung 23 in das Innere des Moduls 3 gelangt, strömt teilweise durch den Zwischenraum 24, der zwischen den oberen Enden der Speicherzellen 11 und der Sicherheitsumhüllung 8 ausgebildet ist. Zum anderen wird vor jeder Speicherzelle 11 eine gewisse Menge der eingelassenen Kühlluft nach unten umgelenkt. Sie strömt entlang der Speicherzelle 11 bis zu deren unteren Enden. Jede Speicherzelle wird auf diese Weise von der eingelassenen Kühlluft umströmt. Wie bereits oben erwähnt, besteht zwischen den unteren Enden der Speicherzellen und der Sicherheitsumhüllung 8 ein weiterer Freiraum 25. Dieser nimmt die entlang der Speicherzellen 11 nach unten geströmte Kühlluft auf. Die vollständig durch den Zwischenraum 24 strömende Kühlluft wird längs der letzten Speicherzelle 11 nach unten geleitet und zusammen mit der im Zwischenraum 25 gesammelten Kühlluft aus dem Inneren des Moduls 3 durch eine Auslaßöffnung 26 der Ableitung 29 zugeführt. Zu diesem Zweck wird die im unteren Bereich des Moduls 3 befindliche Kühlluft durch einen Kanal 27, der durch eine im Innenraum des Moduls angeordnete Wand 28 und die Ableitung 29 begrenzt wird, in den oberen Bereich des Moduls 3 geleitet. Dort befindet sich die Verbindungsöffnung 30, über welche die Kühlluft in die Ableitung 29 einströmen kann. Die Ableitung 29 ist so angeordnet, daß sie parallel zu den Speicherzellen 11 verläuft. Damit kann die aus dem Kanal 28 ausströmende Kühlluft so in die Ableitung 29 eingeleitet werden, daß sie mit der Schwerkraft aus dem Modul ausströmt. Die Austrittsöffnung 31 der Ableitung 29 ist bei dem hier beschriebenen Ausführungsbeispiel am unteren, seitlichen Ende des Moduls installiert. Vorzugsweise wird jedoch die Öffnung im Boden des Moduls angeordnet, da bei der in Fig. 1 gezeigten Hochtemperaturbatterie 1 der Anschluß für die Kühlluftabfuhr im Boden des Hohlraumes 5 angeordnet ist.

Bei Bedarf kann die Kühlluft auch umgekehrt in den Modul 3 eingeleitet werden, das heißt die Ableitung 29 übernimmt die Funktion der Zuleitung 20, während die Zuleitung 20 die Funktion der Ableitung 29 übernimmt. Die Kühlluft strömt jetzt zunächst in den Zwischenraum 25. Ein Teil von ihr wird vor jedem unteren Ende einer Speicherzelle 11 umgelenkt und längs dieser Speicherzelle 11 nach oben in den Zwischenraum 24 geleitet.

## Ansprüche

1. Hochtemperaturbatterie (1) mit mindestens einer elektrochemischen Speicherzelle (11), die von einer thermischen Isolierung (2) sowie den Zu- und Ableitungen (20 und 29) für die Kühlluft umgeben ist, dadurch gekennzeichnet, daß mindestens ein in die Hochtemperaturbatterie (1) einschiebbarer Modul (3) für die Aufnahme der Speicherzellen (11) vorgesehen ist, in welchem eine Zuleitung (20) für die Kühlluft und eine Ableitung (29) für die Kühlluft so angeordnet sind, daß die Kühlluft gegen die Schwerkraft in den Modul (3) ein- und mit der Schwerkraft aus dem Modul (3) ableitbar ist.

2. Hochtemperaturbatterie nach Anspruch 1, dadurch gekennzeichnet, daß jeder Modul (3) in einen Hohlraum (5) der Hochtemperaturbatterie (1) einschiebbar ist.

3. Hochtemperaturbatterie nach einem der Ansprüche 1 oder 2, dadurch gekennzeichnet, daß jeder Hohlraum (5) für jeden Modul (3) wenigstens einen Anschluß (6, 7) für die Kühlluftzufuhr und die Kühlluftabfuhr aufweist.

4. Hochtemperaturbatterie nach einem der Ansprüche 1 bis 3, dadurch gekennzeichnet, daß jeweils sechzehn Speicherzellen in einem Modul (3) angeordnet sind.

5. Hochtemperaturbatterie nach einem der Ansprüche 1 bis 4, dadurch gekennzeichnet, daß in jedem Modul (3) die Speicherzellen (11) freitragend gehaltert sind.

6. Hochtemperaturbatterie nach einem der Ansprüche 1 bis 5, dadurch gekennzeichnet, daß zwischen den Speicherzellen (11) eines jeden Moduls (3) Freiräume für den Durchlaß der Kühlluft vorgesehen sind.

7. Hochtemperaturbatterie nach einem der Ansprüche 1 bis 6 dadurch gekennzeichnet, daß zwischen den Speicherzellen (11) und den inneren Begrenzungsflächen eines jeden Moduls (3) Freiräume für den Durchlaß der Kühlluft vorgesehen sind.

8. Hochtemperaturbatterie nach einem der Ansprüche 1 bis 7, dadurch gekennzeichnet, daß jeder Modul (3) für sich in die Hochtemperaturbatterie (1) einschiebbar und aus der Hochtemperaturbatterie (1) lösbar ist.

9. Hochtemperaturbatterie nach einem der Ansprüche 1 bis 8, dadurch gekennzeichnet, daß jeder Modul (3) von einer Sicherheitsumhüllung (8) umgeben ist.

10. Hochtemperaturbatterie nach einem der Ansprüche 1 bis 8, dadurch gekennzeichnet, daß für jeden Modul (3) eine in den Hohlraum (5) eingebaute Kammer (10) vorgesehen ist.

11. Hochtemperaturbatterie nach einem der Ansprüche 1 bis 10, dadurch gekennzeichnet, daß die Zuleitung (20) und die Ableitung (29) der Kühlluft parallel zu den Speicherzellen angeordnet sind.

12. Hochtemperaturbatterie nach einem der Ansprüche 1 bis 11, dadurch gekennzeichnet, daß die Zuleitung (20) am ersten Ende und die Ableitung (29) der Kühlluft am zweiten Ende des Moduls (3) angeordnet ist.

13. Hochtemperaturbatterie nach einem der Ansprüche 1 bis 12, dadurch gekennzeichnet, daß die Einlaßöffnung (21) der Zuleitung (20) und die Auslaßöffnung (31) der Ableitung (29) an der Unterseite des Moduls (3) angeordnet sind.

14. Hochtemperaturbatterie nach einem der Ansprüche 1 bis 12, dadurch gekennzeichnet, daß die Einlaßöffnung (21) der Zuleitung (20) und die Auslaßöffnung (31) der Ableitung (29) am ersten bzw. am zweiten seitlichen, unteren Ende des Moduls (3) angeordnet sind.

15. Hochtemperaturbatterie nach einem der Ansprüche 1 bis 14, dadurch gekennzeichnet, daß die Zuleitung (20) nur über eine Verbindungsöffnung (23) mit dem Innenraum des Moduls (3) in Verbindung steht.

16. Hochtemperaturbatterie nach einem der Ansprüche 1 bis 15, dadurch gekennzeichnet, daß die Verbindungsöffnung (23) im oberen Bereich des Moduls (3) angeordnet ist.

17. Hochtemperaturbatterie nach Anspruch 1 bis 16, dadurch gekennzeichnet, daß die Ableitung (29) nur über eine Verbindungsöffnung (30) mit dem Innenraum des Moduls (3) in Verbindung steht.

18. Hochtemperaturbatterie nach einem der Ansprüche 1 bis 17, dadurch gekennzeichnet, daß die Verbindungsöffnung (30) im oberen Bereich des Moduls (3) angeordnet ist.

19. Hochtemperaturbatterie nach einem der Ansprüche 1 bis 17, dadurch gekennzeichnet, daß die Kühlluft im Innenraum des Moduls (3) entlang aller Speicherzellen (11) von oben nach unten geführt ist.

20. Hochtemperaturbatterie nach einem der Ansprüche 1 bis 18, dadurch gekennzeichnet, daß die Kühlluft im Innenraum des Moduls (3) entlang aller Speicherzellen (11) von unten nach oben geführt ist.

21. Hochtemperaturbatterie nach Anspruch 1 bis 20, dadurch gekennzeichnet, daß die Funktionen der Zuleitung (20) und der Ableitung (29) vertauschbar sind.

**Claims**

1. High-temperature battery (1) with at least one electrochemical storage cell (11) which is surrounded by thermal insulation (2) and the feed and discharge lines (20 and 29) for the cooling air, characterised in that at least one module (3) for mounting the storage cells (11) is provided, which module can be inserted into the high-temperature battery (1) and in which a feed line (20) for the cooling air and a discharge line (29) for the cooling air are arranged in such a way that the cooling air can be fed into the module (3) against gravity and can be discharged from the module (3) with gravity.

2. High-temperature battery according to Claim 1, characterised in that each module (3) can be inserted into a cavity (5) in the high-temperature battery (1).

3. High-temperature battery according to one of Claims 1 or 2, characterised in that each cavity (5) for each module (3) has at least one connection (6, 7) for the cooling air feed and the cooling air discharge.

4. High-temperature battery according to one of Claims 1 to 3, characterised in that in each case sixteen storage cells are arranged in one module (3).

5. High-temperature battery according to one of Claims 1 to 4, characterized in that the storage cells (11) in each module (3) are fixed in a floating mount.

6. High-temperature battery according to one of Claims 1 to 5, characterised in that free spaces for allowing the cooling air to pass through are provided between the storage cells (11) of each module (3).

7. High-temperature battery according to one of Claims 1 to 6, characterised in that free spaces for allowing the cooling air to pass through are provided between the storage cells (11) and the inner boundary faces of each module (3).

8. High-temperature battery according to one of Claims 1 to 7, characterised in that each module (3) by itself can be inserted into the high-temperature battery (1) and detached from the high-temperature battery (1).

9. High-temperature battery according to one of Claims 1 to 8, characterised in that each module (3) is surrounded by a safety sheath (8).

10. High-temperature battery according to one of Claims 1 to 8, characterised in that a chamber (10) constructed in the cavity (5) is provided for each module (3).

11. High-temperature battery according to one of Claims 1 to 10, characterised in that the feed line (20) and the discharge line (29) of the cooling air are arranged parallel to the storage cells.

12. High-temperature battery according to one of Claims 1 to 11, characterised in that the feed line (20) is arranged at the first end and the discharge line (29) of the cooling air is arranged at the second end of the module (3).

13. High-temperature battery according to one of Claims 1 to 12, characterised in that the inlet opening (21) of the feed line (20) and the outlet opening (31) of the discharge line (29) are arranged on the underside of the module (3).

14. High-temperature battery according to one of Claims 1 to 12, characterised in that the inlet opening (21) of the feed line (20) and the outlet opening (31) of the discharge line (29) are, respectively, arranged on the first and second lateral lower ends of the module (3).

15. High-temperature battery according to one of Claims 1 to 14, characterised in that the feed line (20) communicates with the interior of the module (3) via only one connection opening (23).

16. High-temperature battery according to one of Claims 1 to 15, characterised in that the connection opening (23) is arranged in the upper region of the module (3).

17. High-temperature battery according to Claim 1 to 16, characterised in that the discharge line (29) communicates with the interior of the module (3) via only one connection opening (30).

18. High-temperature battery according to one of Claims 1 to 17, characterised in that the connection opening (30) is arranged in the upper region of the module (3).

19. High-temperature battery according to one of Claims 1 to 17, characterised in that the cooling air in the interior of the module (3) passes downwards along all the storage cells (11).

20. High-temperature battery according to one of Claims 1 to 18, characterised in that the cooling air in the interior of the module (3) passes upward along all the storage cells (11).

21. High-temperature battery according to Claim 1 to 20, characterised in that the functions of the feed line (20) and of the discharge line (29) are interchangeable.

**Revendications**

1. Batterie (1) à haute température, comportant au moins une cellule électrochimique d'accumulation (11) entourée par une isolation thermique (2) ainsi que par les conduits d'adduction et d'évacuation (20 et 29) de l'air de refroidissement, caractérisée par le fait qu'il est prévu au moins un module (3) pouvant être introduit dans la batterie (1) à haute température, destiné à recevoir les cellules d'accumulation (11) et dans lequel un conduit (20) d'adduction de l'air de refroidissement et un conduit (29) d'évacuation de l'air de refroidissement sont disposés de telle sorte que l'air de refroidissement puisse être introduit dans le module (3) à l'encontre de la pesanteur et puisse être évacué de ce module (3) par pesanteur.

2. Batterie à haute température selon la revendication 1, caractérisée par le fait que chaque module (3) peut être introduit dans une cavité (5) de la batterie (1) à haute température.

3. Batterie à haute température selon l'une des revendications 1 ou 2, caractérisée par le fait que la cavité (5) associée à chaque module (3) présente au moins un raccord (6, 7) pour l'adduction et l'évacuation de l'air de refroidissement.

4. Batterie à haute température selon l'une des revendications 1 à 3, caractérisée par le fait que seize cellules respectives d'accumulation sont disposées dans un module (3).

5. Batterie à haute température selon l'une des revendications 1 à 4, caractérisée par le fait que, dans chaque module (3), les cellules d'accumulation (11) sont maintenues en porte-à-faux.

6. Batterie à haute température selon l'une des revendications 1 à 5, caractérisée par le fait que des espaces libres permettant le passage traversant de l'air de refroidissement sont ménagés entre les cellules d'accumulation (11) de chaque module (3).

7. Batterie à haute température selon l'une des revendications 1 à 6, caractérisée par le fait que des espaces libres permettant le passage traversant de l'air de refroidissement sont réservés entre les cellules d'accumulation (11) et les surfaces internes de délimitation de chaque module (3).

8. Batterie à haute température selon l'une des revendications 1 à 7, caractérisée par le fait que chaque module (3) peut, individuellement, être introduit dans la batterie (1) à haute température et être démonté de cette batterie (1) à haute température.

9. Batterie à haute température selon l'une des revendications 1 à 8, caractérisée par le fait que chaque module (3) est entouré par une enveloppe de sûreté (8).

10. Batterie à haute température selon l'une des revendications 1 à 8, caractérisée par le fait qu'il est prévu, pour chaque module (3), une chambre (10) incorporée dans la cavité (5).

11. Batterie à haute température selon l'une des revendications 1 à 10, caractérisée par le fait que le conduit d'adduction (20) et le conduit d'évacuation (29) de l'air de refroidissement sont disposés parallèlement aux cellules d'accumulation.

12. Batterie à haute température selon l'une des revendications 1 à 11, caractérisée par le fait que le conduit d'adduction (20) et le conduit d'évacuation (29) de l'air de refroidissement sont respectivement disposés aux première et seconde extrémités du module (3).

13. Batterie à haute température selon l'une des revendications 1 à 12, caractérisée par le fait que l'orifice d'entrée (21) du conduit d'adduction (20) et l'orifice de sortie (31) du conduit d'évacuation (29) se trouvent à la face inférieure du module (3).

14. Batterie à haute température selon l'une des revendications 1 à 12, caractérisée par le fait que l'orifice d'entrée (21) du conduit d'adduction (20) et l'orifice de sortie (31) du conduit d'évacuation (29) sont respectivement disposés dans les première et seconde extrémités inférieures latérales du module (3).

15. Batterie à haute température selon l'une des revendications 1 à 14, caractérisée par le fait que le conduit d'adduction (20) communique avec l'espace interne du module (3) seulement par l'intermédiaire d'un orifice de jonction (23).

16. Batterie à haute température selon l'une des revendications 1 à 15, caractérisée par le fait que l'orifice de jonction (23) est ménagé dans la région supérieure du module (3).

17. Batterie à haute température selon les revendications 1 à 16, caractérisée par le fait que le conduit d'évacuation (29) communique avec l'espace interne du module (3) seulement par l'intermédiaire d'un orifice de jonction (30).

18. Batterie à haute température selon l'une des revendications 1 à 17, caractérisée par le fait que l'orifice de jonction (30) est disposé dans la région supérieure du module (3).

19. Batterie à haute température selon l'une des revendications 1 à 17, caractérisée par le fait que l'air de refroidissement circule, dans l'espace interne du module (3), de haut en bas le long de toutes les cellules d'accumulation (11).

20. Batterie à haute température selon l'une des revendications 1 à 18, caractérisée par le fait que l'air de refroidissement circule, dans l'espace interne du module (3), de bas en haut le long de toutes les cellules d'accumulation (11).

21. Batterie à haute température selon les revendications 1 à 20, caractérisée par le fait que les fonctions du conduit d'adduction (20) et du conduit d'évacuation (29) sont interchangeables.

Fig.1

Fig. 2

# Fig.3